(19) Europäisches Patentamt
European Patent Office
Office européen des brevets

(11) **EP 0 987 518 B1**

(12) **EUROPÄISCHE PATENTSCHRIFT**

(45) Veröffentlichungstag und Bekanntmachung des Hinweises auf die Patenterteilung:
**18.02.2009  Patentblatt 2009/08**

(51) Int Cl.:
*G01C 19/72* (2006.01)     *G05D 23/19* (2006.01)
*H01S 3/067* (2006.01)

(21) Anmeldenummer: **99118412.8**

(22) Anmeldetag: **16.09.1999**

(54) **Faseroptischer Kreisel mit geschlossener Regelschleife und Kompensation des Shupe-Effekts**

Fiber optic gyroscope with closed loop and compensation of shupe biais

Gyroscope à fibre optique avec boucle fermée et compensation de l'effet Shupe

(84) Benannte Vertragsstaaten:
**FR GB**

(30) Priorität: **17.09.1998  DE 19842702**

(43) Veröffentlichungstag der Anmeldung:
**22.03.2000  Patentblatt 2000/12**

(73) Patentinhaber: **Northrop Grumman LITEF GmbH**
**79115 Freiburg (DE)**

(72) Erfinder:
• **Handrich, Eberhard, Dr.**
  **79199 Kirchzarten (DE)**
• **Kemmler, Manfred, Dipl.-Phys.**
  **79279 Vörstetten (DE)**

(74) Vertreter: **Müller - Hoffmann & Partner**
**Patentanwälte**
**Innere Wiener Strasse 17**
**81667 München (DE)**

(56) Entgegenhaltungen:
EP-A- 0 723 320         US-A- 5 274 659
US-A- 5 416 585         US-A- 5 767 509

• **FRIGO N J: "COMPENSATION OF LINEAR SOURCES OF NON-RECIPROCITY IN SAGNAC INTERFEROMETERS" SELECTED PAPERS ON FIBER OPTIC GYROSCOPES, SPIE MILESTONE SERIES, BELLINGHAM, SPIE, US, Bd. MS 8, 1989, Seiten 302-305, XP000232997**

**Beschreibung**

Die Erfindung bezieht sich auf ein Verfahren zur Kompensation von temperaturbedingten Driftänderungen in einem faseroptischen Kreisel und auf einen faseroptischen Kreisel, der nach dem Verfahren arbeitet.
Bei faseroptischen Kreiseln werden zwei aus einer Lichtquelle stammende Lichtstrahlen in entgegengesetzten Richtungen in eine Faserspule eingestrahlt, um in entgegengesetzten Richtungen durch diese hindurchzulaufen. Nachdem die Lichtstrahlen durch die Spule hindurchgelaufen sind, werden sie wieder vereinigt, um auf einem Detektor ein Interferenzbild zu erzeugen. Wird die Spule um ihre Achse gedreht, so entsteht aufgrund des Sagnac-Effekts zwischen den beiden entgegengesetzt eingestrahlten Lichtstrahlen eine nichtreziproke Phasenverschiebung, die eine Verschiebung des Interferenzmuster erzeugt. Die Stärke und Richtung der Interferenzverschiebung ist proportional zur Drehrate und -richtung der Drehung der Spule um ihre Achse. Bei rückgestellten faseroptischen Kreiseln wird das Ausgangssignal des Detektors über elektronische Regelkreise zu einer nichtreziproken Phasenverschiebung verarbeitet, die einen Phasenmodulator beaufschlagt, der sich im Allgemeinen an einem Ende der Faserspule befindet, um die durch die Drehung erzeugte Sagnac-Phasenverschiebung der beiden gegenläufigen Lichtwellen zu kompensieren. Bei solchen faseroptischen Kreiseln ist die nichtreziproke Phasenverschiebung φ, die zur Kompensation der durch die Drehung der Spule erzeugten Interferenzverschiebung benötigt wird, entsprechend der folgenden Gleichung von der Drehung W abhängig:

$$\varphi = S \cdot W,$$

wobei S den Skalenfaktor definiert. Der Skalenfaktor S ist abhängig von Änderungen der Faserlänge der Spule. Aus EP 0 245 118 B1 ist es bekannt, den Skalenfaktor S durch Messung und Korrektur der Faserlänge In einem faseroptischen Kreisel zu stabilisieren. Hierfür sind Mittel zum Vergleich des Ausgangssignals des Detektors mit einem Signal vorgesehen, das von der Phasenmodulation abgeleitet ist. Dadurch wird ein Signal erzeugt, das proportional zur aktuellen optische Länge der Faserspule ist. Dieses Signal wird benutzt, um die Frequenz $f_M$ des Phasenmodulators so zu steuern, daß immer gilt:

$$f_M = \frac{1}{2\tau} = \frac{c}{2nL}$$

Dabei ist τ die Durchlaufzeit des Lichts durch die Spule, c die Lichtgeschwindigkeit, n der Brechungsindex der Faser und L die Länger der Faser auf der Spule. Damit ist $f_M$ ein Maß für die optische Faserlänge auf der Spule. Falls der Brechungsindex n konstant ist, kann die geregelte Modulationsfrequenz - wie an sich bekannt - zur Skalenfaktorkorrektur herangezogen werden, wodurch hohe Intensitätssprünge am Detektor vermieden werden. Ändert sich dagegen der Brechungsindex n, so ist diese Skalenfaktorkorrektur nicht brauchbar, weil $f_M$ davon abhängt, der Skalenfaktor S aber nicht.
Bei der in der genannten EP-Druckschrift vermittelten technischen Lehre, die Ausgangspunkt der Erfindung ist, wird außerdem nicht berücksichtig, daß zeitliche Änderungen der Temperatur Driftänderungen im Faserkreisel bewirken, die für Erwärmung beziehungsweise Abkühlen unterschiedlich sind. Dieses als Shupe-Effekt grundsätzlich bekannte Verhalten hängt indirekt von der Temperatur und deren zeitlichen Ableitungen ab und ist - wie genauere Untersuchungen zeigen - beeinflußt durch:

- die Ausdehnungskoeffizienten des Hüll- und Kernmaterials der optischen Faser, der Beschichtung, der Klebeschichten und des Spulenkörpers;
- die Variation des Brechungsindexes über der Temperatur; und
- die Veränderung des internen Drucks in der Spule, der durch unterschiedliche Ausdehnungskoeffizienten der oben genannten Materialien erzeugt wird, und der durch seinen Einfluß wiederum auf den Brechungsindex sowie auf die Längendehnung wirkt.

Der Shupe-Effekt läßt sich duch eine sogenannte guadropolwicklung der Spule reduzieren.
Solche Wicklungsarten sind beispielsweise aus US-A-5 767 509 bzw. FRIGO N J: "COMPENSATION OF LINEAR SOURCES OF NON-RECIPROCITY IN SAGNAC INTERFEROMETERS" SELECTED PAPERS ON FIBER OPTIC GYROSCOPES, SPIE MI-LESTONE SERIES, BELLINGHAM, SPIE, US, Bd. MS 8, 1989, Seiten 302-305, XP000232997 bekannt.
Für die immer noch zu beobachtende verbleibende Restdrift ist aufgrund der vielen Einflußparameter ein Temperaturmodell, das abhängig von der Temperatur T und deren zeitlichen Ableitungen $\dot{T}$ und $\ddot{T}$ ist, kompliziert und nicht linear. Die Wiederholbarkeit und Langzeitstabilität ist vor allem deshalb schlecht, weil sich interne Druckdifferenzen vor allem in den verwendeten organischen Materialien langfristig wieder ausgleichen können. Außerdem lassen sich Temperatursensoren nicht in der Faserwicklung der Spulen plazieren. Wegen der schlechten Wärmeleitung von Faserspulen repräsentieren die Temperaturmeßwerte meist nicht gut die Temperatur der Spulenwicklung. Solche Temperaturmodelle zur Eingrenzung des Shupe-Effekts sind bekannt, beispielsweise aus US-A-5 416 858, welche offenbart, dass die Temperaturdifferenz zwischen einem Gehäuse des Kreisels und der Spule bestimmt und zwar Kompensation von thermisch induzierten Driftänderungen benutzt wird, aber ganz befriedigende Lösungsansätze existieren nicht.

Der Erfindung liegt damit die Aufgabe zugrunde, ein Verfahren zur Kompensation von temperaturbedingten Driftänderungen in einem faseroptischen Kreisel und ein nach diesem Verfahren arbeitenden Kreisel anzugeben, durch das sich der Shupe-Effekt mit seinem Einfluß auf die Drift eines Faserkreiseis ausgleichen läßt.

Der Erfindung liegt die Erkenntnis zugrunde, daß die unmittelbare Einflußgröße auf den Shupe-Effekt die Änderung des optischen Weges n·L ist, wobei n der Brechungsindex der optischen Faser und L ihre Länge ist, deren räumliche Unterschiede sich über Asymmetrien der Wicklung auswirken. Deshalb wird entsprechend der Erfindung ein Modell zur Kompensation des Shupe-Effekts von der Messung des optischen Wegs n·L abgeleitet und die Driftänderung im Ausgangssignal des faseroptischen Kreisels wird auf Grundlage des gebildeten Modells kompensiert. Wie oben gezeigt, ist $f_M$ ein direktes Maß von n·L.

Vorteilhafte Weiterbildungen dieser in Patentanspruch 1 definierten Lehre sind Gegenstände der abhängigen Patentansprüche 2 bis 8.

Primär sieht die Erfindung vor, den restlichen Shupe-Effekt über die Modulationsfrequenz $f_M$ zu kompensieren, wobei $f_M$ durch einen dem faseroptischen Kreisel zugeordneten VCO-Regelkreis so geregelt wird, daß immer gilt:

$$f_M = \frac{1}{2\tau} = \frac{c}{2nL}$$

Entscheidend ist dabei, daß aufgrund der Messung der direkten Einflußgröße sich das Modell wiederholbar und langzeitstabil verhält.

Ein nach dem erfindungsgemäßen Verfahren arbeitender faseroptischer Kreisel ist in Patentanspruch 9 definiert. Eine vorteilhafte Weiterbildung ist Gegenstand des Patentanspruchs 10.

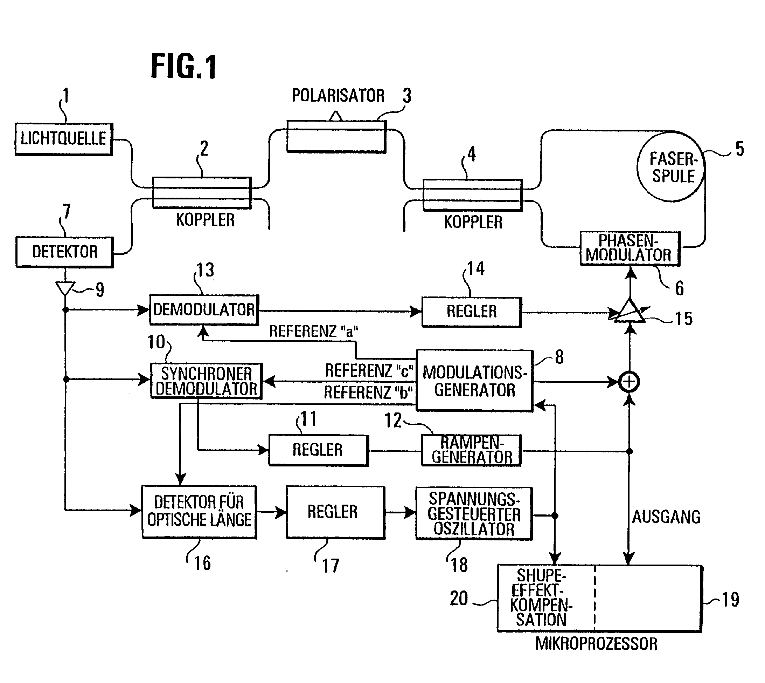

Die Erfindung und vorteilhafte Einzelheiten werden nachfolgend unter Bezug auf die Zeichnung in einer beispielhaften Ausführungsform näher erläutert. Sie zeigt als einzige Fig. 1 ein Blockschaltbild einer Ausführungsform eines faseroptischen Kreisels mit geschlossener Regelschleife, der entsprechend dieser Erfindung aufgebaut ist.

Die schematische Blockbilddarstellung der Fig. 1 verdeutlicht den Aufbau eines faseroptischen Kreisels mit geschlossener Regeischleife, wobei hinsichtlich des eigentlichen Interferometers nur eine Minimalkonfiguration dargestellt ist. Zu diesem Interferometer gehört eine Lichtquelle 1, beispielsweise eine Superlumineszenzdiode (SLD), deren Lichtstrahl über einen ersten Koppler 2 über einen Polarisator 3 auf einen zweiten Koppler 4 gelangt und in letzterem in einen im Uhrzeigersinn und in einen gegen den Uhrzeigersinn verlaufenden Teillichtstrahl aufgeteilt wird. Die beiden Teillichtstrahlen werden nach dem Durchlaufen der Spule 5 am zweiten Koppler 4 wiedervereinigt und gelangen über den ersten Koppler 2 in bekannter Weise auf einen Photodetektor 7, der ein der Intensität des Ergebnisses der Überlagerung der beiden wiedervereinigten Teillichtstrahlen entsprechendes Signal über einen Verstärker 9 an eine nachfolgend beschriebene elektronische Signalverarbeitungsschaltung liefert. Im Ruhezustand des Kreisels, d.h. ohne eine Drehung der Spule 5, besteht zwischen den beiden Teillichtstrahlen eine Phasendifferenz von Null. Bei Drehung der Spule 5 um ihre Achse tritt zwischen den beiden Lichtstrahlen aufgrund des Sagnac-Effekts eine nichtreziproke Phasenverschiebung auf, wodurch die am Detektor 7 erfaßte Intensität variiert. Damit der Kreisel hinsichtlich Größe und Richtung des zu detektierenden Signals in seinem empfindlichsten Bereich arbeitet, wird mittels des Phasenmodulators 6 eine Phasendifferenz von ±n·π/2 zwischen den beiden Teillichtstrahlen erzeugt (n = 1, 3, 5 ...). Ein Modulationsgenerator 8 beaufschlagt über einen steuerbaren Verstärker 15 den Phasenmodulator 6 und wird seinerseits über einen nachfolgend beschriebenen VCO - also einen spannungsgesteuerten Regelkreis - erregt, zu dem z. B. ein Detektor 16 für optische Länge, ein Regler 17 und ein spannungsgesteuerter Oszillator 18 gehören. Die Umschaltung der Erregung des Phasenmodulators 6 erfolgt synchron zur Durchlaufzeit des Lichts durch die Spule 5. Das Ausgangssignal des Photodetektors 7 gelangt über den Verstärker 9 zusammen mit der Referenz des Modulationsgenerators 8 an einen Synchrondemodulator 10, der das Detektorsignal demoduliert. Der Synchrondemodulator 10 liefert ein die Richtung der Phasenverschiebung am Detektor 7 anzeigendes Signal, welches durch einen Regler 11 integriert und an einen Rampengenerator 12 angelegt wird, der seinerseits den Phasenmodulator 6 so beaufschlagt, daß eine nichtreziproke Phasenverschiebung zwischen den beiden die Spule 5 durchsetzenden Teillichtstrahlen erzeugt wird, so daß die durch eine Drehung der Spule 5 erzeugte Phasenverschiebung ausgeglichen wird. Bei Phasenänderung von 2π sollte am Detektor 7 aufgrund der periodischen Kennlinie kein Signal entstehen. Ist der Modulatorskalenfaktor nicht genau justiert, wird ein Signal am Demodulator 13 mit Referenz "a" vom Modulationsgenerator 8 detektiert und der steuerbare Verstärker 15 über einen Regler 14 so gesteuert, daß das Störsignal verschwindet. Das Ausgangssignal des Verstärkers 9 beaufschlagt außerdem den Detektor 16 für optische Länge, der zusätzlich mit dem die Synchronisation mit der Durchlaufzeit des Lichts durch die Spule 5 erzeugenden Eingangssignal des Modulationsgenerators 8 mit Referenz "b" gespeist ist. Der Detektor 16 für optische Länge erzeugt eine Ausgangsspannung, die einerseits davon abhängt, ob die Übergänge im Intensitätssignal des Detektors 7 hinsichtlich der Phasenumschaltung zu früh oder zu spät erfolgen und die andererseits auch von der Dauer der Übergangspulse abhängt. Die Ausgangssignale des Detektors 16 für optische Länge werden durch einen Regler 17 verstärkt, dessen Ausgangssignal einen spannungssteuerbaren Oszillator 18 erregt, der damit den Modulationsgenerator 8 speist und synchronisiert.

Das Ausgangssignal eines Rampengenerators 12 wird an einen Mikroprozessor 19 gelegt, der die korrigierte Amplitude und Richtung der auf die Spule 5 wirkenden Drehung bestimmt und ausgibt.

Der soweit beschriebene faseroptische Kreisel unterscheidet sich hinsichtlich des in der genannten Druckschrift EP 0 245 118 B1 beschriebenen u. a. darin, daß die Frequenz des spannungsgesteuerten Oszillators 18 nicht zur Skalenfaktorkorrektur wegen der Abhängigkeit vom Brechungsindex n verwendet wird. Vielmehr wird der Mikroprozessor 19 an einem weiteren Eingang durch das Ausgangssignal des spannungsgesteuerten Oszillators 18 beaufschlagt, um den oben erläuterten Shupe-Effekt zu kompensieren. In der als Shupe-Effekt-Kompensation 20 bezeichneten Baugruppe ist ein Modell der Drift aufgrund des Shupe-Effekts des Jeweiligen faseroptischen Kreisels gespeichert.

Dieses Drift-Modell hängt ab vom optischen Weg $n \cdot L$ des Lichtwegs durch die Faserspule 5. Anhand des gelieferten Ausgangssignals korrigiert der Mikroprozessor 19 das berechnete Ergebnis von Amplitude und Richtung der Drehung der Faserspule 5. Die Korrektur der optischen Lichtwellenlänge wird bei dieser Ausführungsform über die Modulationsfrequenz $f_M$ des VCO des Regelkreises 16, 17, 18 gewonnen.

Das Modell der temperaturabhängigen Drift kann zum Beispiel abhängig sein von der Modulationsfrequenz $f_M$, ist aber hauptsächlich abhängig von ihrer ersten zeitlichen Ableitung $\dot{f}_M$ bzw. ihrer zweiten zeitlichen Ableitung $\ddot{f}_M$. In der Praxis wird das Modell beispielsweise dadurch gewonnen, daß für den Kreisel der zeitliche Verlauf der Modulationsfrequenz und seiner zeitlichen Ableitungen von Temperatur und der zeitliche Verlauf der temperaturabhängigen Drift aufgezeichnet werden. Dieses beispielsweise experimentell ermittelte Modell der temperaturabhängigen Drift entspricht z.B. einem Polynom höherer Ordnung, in Einzelfällen einer linearen Funktion, z.B. von $f_M$.

Die Shupe-Effekt-Kompensation 20 kann entweder ein Rechenmodul sein, der abhängig von der angelegten Modulationsfrequenz $f_M$ einen Kompensationswert errechnet, oder kann als Look-up-Tabelle aufgebaut sein, aus der entsprechend der angelegten Modulationsfrequenz $f_M$ ein zugeordneter Kompensationswert ausgelesen wird.

Der Kompensationswert kann entweder so gewählt sein, daß er zur Korrektur des Ausgangssignals des Mikroprozessors 19 einfach zu dessen zuvor errechnetem Ergebnis hinzuaddiert wird, also dessen Ausgangssignal direkt beaufschlagt. Der Kompensationswert kann jedoch auch so gewählt werden, daß er in geeigneter Form in die im Mikroprozessor 19 ausgeführte Berechnung des Betrages und der Richtung der auf die Spule wirkenden Drehung einwirkt.

**Patentansprüche**

1. Verfahren zur Kompensation von temperaturbedingten Driftänderungen in einem faseroptischen Kreisel, **gekennzeichnet durch** folgende Schritte:

   Messung des optischen Wegs des Lichts **durch** eine Faserspule:

   Berechnen der temperaturabhängigen zeitlichen Änderung des optischen Wegs des Lichts **durch** eine Faserspule (5) des faseroptischen Kreisels: und
   Kompensation dieser Driftänderungen im Ausgangssignal des faseroptischen Kreisels auf der Grundlage eines die zeitliche Änderung des optischen Wegs nachbildenden Modells.

2. Verfahren nach Anspruch 1. **dadurch gekennzeichnet, daß** der optische Weg des Lichts durch eine über einen VCO-Regelkreis (16, 17. 18) erzeugte Modulationsfrequenz gemessen wird.

3. Verfahren nach Anspruch 2, **dadurch gekennzeichnet, daß** das Modell der temperaturbedingten Drift abhängig von der Modulationsfrequenz deren erster zeitlicher Ableitung und/oder von deren zweiter zeitlicher Ableitung gewonnen wird.

4. Verfahren nach nach Anspruch 2 oder 3, **dadurch gekennzeichnet, daß** das Modell der temperaturbedingten Drift empirisch generiert wird, indem für den faseroptischen Kreisel der zeitliche Verlauf der Modulationsfrequenz und deren zeitlicher Ableitungen abhängig von der Temperatur und der zeitliche Verlauf der temperaturabhängigen Drift erfaßt werden.

5. Verfahren nach einem der vorstehenden Ansprüche, **dadurch gekennzeichnet, daß** das Modell der temperaturbedingten Drift über einen Polynomansatz gewonnen wird.

6. Verfahren nach einem der vorstehenden Ansprüche 1 bis 4, **dadurch gekennzeichnet, daß** ein lineares Modell der temperaturbedingten Drift erzeugt wird.

7. Verfahren nach einem der vorstehenden Ansprüche, **dadurch gekennzeichnet, daß** zur Kompensation der Driftänderungen in einem Ausgangssignal des faseroptischen Kreisels jeweils auf Grundlage des gebildeten Modells ein Kompensationswert errechnet wird, mit dem das Ausgangssignal beaufschlagt wird.

8. Verfahren nach einem der vorstehenden Ansprüche, **dadurch gekennzeichnet, daß** zur Kompensation der Driftänderungen in einem Ausgangssignal des faseroptischen Kreisels jeweils ein auf Grundlage des gebildeten Modells berechneter Kompensationswert aus einem Speicher ausgelesen wird, der das Ausgangssignal beeinflußt.

9. Interferometrischer faseroptischer Kreisel, mit:

einer zu einer Spule (5) gewickelten optischen Faser mit einer Länge (L),
einer Lichtquelle (1), deren Lichtstrahl in einem Koppler (4) in wenigstens zwei Teilstrahlen aufgeteilt wird, die in Gegenrichtung durch die Faser laufen,
einem Mittel (4) zur Wiedervereinigung der Teilstrahlen, um ein Interferenzbild der beiden wiedervereinigten Teilstrahlen zu bilden, nachdem die Teilstrahlen die optische Faser verlassen haben,
einem vom Interferenzbild beaufschlagten Detektor (7) zur Erzeugung eines Signals, das die Intensität des Interferenzbildes anzeigt,
einer Auswerteeinheit (19), die die auf die Faserspule (5) wirkende Drehung abhängig von dem Ausgangssignal des Detektors (7) bestimmt,
**gekennzeichnet durch**
eine Einrichtung zur Kompensation von temperaturabhängigen Driftänderungen des Kreisels abhängig von der Änderung der optischen Länge der Faser (5) auf der Grundlage eines die zeitliche Änderung der optischen Länge nachbildenden Modells.

10. Kreisel nach Anspruch 9, **dadurch gekennzeichnet, daß**

die Einrichtung zur Kompensation der temperaturabhängigen Änderungen der optischen Länge (n.L) der Faserspule (5) einen VCO-Regelkreis (16, 17, 18) enthält, und daß
in Abhängigkeit vom Ausgangssignal dieses VCO-Regelkreises (16, 17, 18) Korrekturwerte für die Auswerteeinheit (19) unter Rückgriff auf ein gespeichertes Modell der temperaturabhängigen Driftänderungen des Kreisels erzeugbar sind.

**Claims**

1. A method for compensation for temperature-dependent drift changes in a fiber optic gyro, **characterized by** the following steps:

Measurement of the optical path length of the light through a fiber coil;
Calculation of the temperature-dependent time change of the optical path length of the light through a fiber coil (5) of the fiber optic gyro; and
Compensation for these drift changes in the output signal of the fiber optic gyro on the basis of a model forming the time change of the optical path length.

2. The method as claimed in claim 1, **characterized in that** the optical path length of the light is measured by means of a modulation frequency produced via a VCO control loop (16, 17, 18).

3. The method as claimed in claim 2, **characterized in that** the model of the temperature-dependent drift is obtained as a function of the modulation frequency, its first time derivative and/or of its second time derivative.

4. The method as claimed in claim 2 or 3, **characterized in that** the model of the temperature-dependent drift is generated empirically by the time profile of the modulation frequency and its time derivatives being detected for the fiber optic gyro as a function of the temperature and the time profile of the temperature-dependent drift.

5. The method as claimed in one of the preceding claims, **characterized in that** the model of the temperature-dependent drift is obtained via a polynomial rule.

6. The method as claimed in one of the preceding claims 1 to 4, **characterized in that** a linear model of the temperature-dependent drift is produced.

7. The method as claimed in one of the preceding claims, **characterized in that**, in order to compensate for drift changes in an output signal of the fiber optic gyro, a compensation value is in each case calculated on the basis of the model formed, and is applied to the output signal.

8. The method as claimed in one of the preceding claims, **characterized in that**, in order to compensate for drift changes in an output signal of the fiber optic gyro, a compensation value calculated on the basis of the model formed is in each case read from a memory, and influences the output signal.

9. An interferometric fiber optic gyro, having:

an optical fiber, which is wound to form a coil (5) and has a length (L),
a light source (1) whose light beam is split in a coupler (4) into at least two beam elements which run in opposite directions through the fiber,
a means (4) for recombining the beam elements, in order to form an interference pattern of the two recombined beam elements once the beam elements have left the optical fiber,

a detector (7) to which the interference pattern is applied in order to produce a signal which indicates the intensity of the interference pattern, an evaluation unit (19) which determines the rotation acting on the fiber coil (5) as a function of the output signal of the detector (7),

**characterized by**

a means for compensation for temperature-dependent drift changes of the gyro as a function of the charge of the optical length of the fiber on the basis of a model forming the time change of the optical length.

10. The gyro as claimed in claim 9, **characterized in that**

the means for compensation for the temperature-dependent changes of the optical length (n·L) of the fiber coil (5) includes a VCO control loop (16, 17, 18), and that

dependent on the output signal of the VCO control loop (16, 17, 18), correction values for the evaluation unit (19) can be generated taking into account a stored model of the temperature-dependent drift changes of the gyro.

**Revendications**

1. Procédé pour compenser des variations de dérive dues à la température, dans un gyroscope à fibre optique, **caractérisé par** les étapes suivantes :

mesure de la trajectoire optique de la lumière à travers une bobine de fibre ;

calcul de la variation dans le temps, en fonction de la température, de la trajectoire optique de la lumière à travers une bobine de fibre (5) du gyroscope à fibre optique ; et

compensation de ces variations de dérive dans le signal de sortie du gyroscope à fibre optique, sur la base d'un modèle qui reproduit la variation dans le temps de la trajectoire optique.

2. Procédé selon la revendication 1, **caractérisé en ce que** la trajectoire optique de la lumière est mesurée grâce à une fréquence de modulation produite par l'intermédiaire d'un circuit de régulation à oscillateur commandé par une tension (VCO) (16, 17, 18).

3. Procédé selon la revendication 2, **caractérisé en ce que** le modèle de la dérive due à la température est obtenu en fonction de la fréquence de modulation, de sa première dérivation dans le temps et/ou de sa seconde dérivation dans le temps.

4. Procédé selon la revendication 2 ou 3, **caractérisé en ce qu'**on génère le modèle de la dérive due à la température de manière empirique, en enregistrant pour le gyroscope à fibre optique la courbe dans le temps de la fréquence de modulation et des dérivations dans le temps de celle-ci en fonction de la température, et la courbe dans le temps de la dérive qui est fonction de la température.

5. Procédé selon l'une des revendications précédentes, **caractérisé en ce que** le modèle de la dérive due à la température est obtenu par l'intermédiaire d'une mise en équation polynôme.

6. Procédé selon l'une des revendications 1 à 4 précédentes, **caractérisé en ce qu'**on produit un modèle linéaire de la dérive due à la température.

7. Procédé selon l'une des revendications précédentes, **caractérisé en ce que** pour compenser les variations de dérive dans un signal de sortie du gyroscope à fibre optique, on calcule sur la base du modèle formé une valeur de compensation qui est appliquée au signal de sortie.

8. Procédé selon l'une des revendications précédentes, **caractérisé en ce que** pour compenser les variations de dérive dans un signal de sortie du gyroscope à fibre optique, on sort d'une mémoire une valeur de compensation calculée sur la base du modèle formé, qui influe sur le signal de sortie.

9. Gyroscope interférométrique à fibre optique, avec :

une fibre optique d'une longueur (L) qui est enroulée pour former une bobine (5),

une source de lumière (1) dont le rayon lumineux est divisé dans un coupleur (4) en au moins deux rayons partiels qui traversent la fibre dans des sens opposés,

un moyen (4) pour réunir les rayons partiels afin de former une image d'interférence des deux rayons partiels réunis, après que ceux-ci ont quitté la fibre optique,

un détecteur (7) auquel est appliquée l'image d'interférence, pour produire un signal qui indique l'intensité de l'image d'interférence,

une unité d'analyse (19) qui définit, en fonction du signal de sortie du détecteur (7), la rotation agissant sur la bobine de fibre (5),

**caractérisé par** un dispositif pour compenser des variations de dérive du gyroscope liées à la température, en fonction de la variation de la longueur optique de la fibre (5) sur la base d'un modèle qui reproduit la variation dans le temps de la longueur optique.

**10.** Gyroscope selon la revendication 9 **, caractérisé**

**en ce que** le dispositif pour compenser les variations de la longueur optique (n·L) de la bobine de fibre (5) liées à la température contient un circuit de régulation VCO (16, 17, 18),
et **en ce qu'**en fonction du signal de sortie de ce circuit de régulation VCO (16, 17, 18), des valeurs de correction pour l'unité d'analyse (19) peuvent être produites à l'aide d'un modèle mis en mémoire des variations de dérive du gyroscope liées à la température.

**FIG.1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0245118 B1
- US 5767509 A
- US 5416858 A

### In der Beschreibung aufgeführte Nicht-Patentliteratur

- **FRIGO N J.** COMPENSATION OF LINEAR SOURCES OF NON-RECIPROCITY IN SAGNAC INTERFEROMETERS. *FIBER OPTIC GYROSCOPES, SPIE MI-LESTONE SERIES,* 1989, vol. 8, 302-305